# EUROPEAN PATENT SPECIFICATION

(11) **EP 3 793 842 B1**
(45) Date of publication and mention of the grant of the patent: **03.04.2024**
(21) Application number: 18919041.6
(22) Date of filing: 18.05.2018
(51) Int. Cl.: B60C 1/00, C08L 15/00, C08L 7/00, C08K 3/36, C08C 19/22, C08C 19/25, C08C 19/44, C08K 3/04

(54) **A COMPOSITION FOR A TIRE TREAD**
ZUSAMMENSETZUNG FÜR EINE REIFENLAUFFLÄCHE
COMPOSITION POUR UNE BANDE DE ROULEMENT DE PNEU

(43) Date of publication of application: 24.03.2021
(73) Proprietor: COMPAGNIE GENERALE DES ETABLISSEMENTS MICHELIN, 63000 Clermont-Ferrand (FR)
(72) Inventor: KAWASAKI, Kenichi, Tokyo 163-1073 (JP); NAKAO, Ayako, Tokyo 163-1073 (JP)
(74) Representative: M.F.P. Michelin
(86) International application number: PCT/JP2018/019320
(87) International publication number: WO 2019/220627

(56) References cited:
- EP-A1- 3 000 618
- EP-A1- 3 577 143
- EP-B1- 3 000 618
- WO-A1-2008/013090
- WO-A1-2009/050944
- WO-A1-2012/069567
- WO-A1-2017/104423
- JP-A- 2009 155 631
- JP-A- 2012 180 408
- JP-A- 2013 007 025
- JP-A- 2013 082 841
- JP-A- 2013 082 842
- JP-A- 2015 221 884
- JP-A- 2016 003 280
- JP-A- 2016 044 271
- JP-A- 2016 094 557
- JP-A- 2016 125 011
- JP-A- 2017 002 189
- JP-A- 2017 088 770
- US-A1- 2015 159 001

## Description

### Technical Field

The field of the invention is that of rubber compositions for tire treads.

### Background Art

In recent years, tires which have high grip, especially wet grip, on paved roads (hereinafter On-road), for instance asphalt roads, have been demanded by users of automobiles and proposed by tire manufacturers.

In parallel, it remains important for tires to be also performant on tracks or unpaved roads (hereinafter Off-road), for instance tracks made of materials such as mud and rocks.

An objective of tire manufacturers is to reconcile performances not only under on-road conditions, but also under off-road conditions with a single tire product. WO2012069567 discloses a tyre, the tread of which comprises a rubber composition, that made it possible to improve the grip performance on wet ground of tires with low rolling resistance.

### Summary of Invention

### Technical Problem

During their research, the inventors have discovered that a specific rubber composition for a tire tread allows unexpectedly improved balance of performances between On-road performance and Off-road performance.

In the present description, unless expressly stated otherwise, all the percentages (%) indicated are percentages by weight (wt%).

The expression "elastomer matrix" is understood to mean, in a given composition, all of the elastomers present in said rubber composition.

The abbreviation "phr" signifies parts by weight per hundred parts by weight of the elastomer matrix in the considered rubber composition.

In the present description, unless expressly indicated otherwise, each Tg_{DSC} (glass transition temperature) is measured in a known way by DSC (Differential Scanning Calorimetry) according to Standard ASTM D3418-08.

Any interval of values denoted by the expression "between a and b" represents the range of values of greater than "a" and of less than "b" (i.e. the limits a and b excluded) whereas any interval of values denoted by the expression "from a to b" means the range of values going from "a" to "b" (i.e. including the strict limits a and b).

The expression "based on" should be understood in the present application to mean a composition comprising the mixture(s) and/or the product of the reaction of the various constituents used, some of the constituents being able or intended to react together, at least partly, during the various manufacturing phases of the composition, in particular during the vulcanization (curing).

### Solution to Problem

A first aspect of the invention is a tire having a tread comprising a rubber composition based on at least an elastomer matrix comprising 5 to 95 phr of a first diene elastomer bearing at least one SiOR function, R being a hydrogen atom or a hydrocarbon radical, the SiOR function not located at the chain ends of the first diene elastomer, and 5 to 95 phr of a second diene elastomer which is a polyisoprene, and a reinforcing filler comprising more than 45 phr (for example, between 45 and 135 phr) of a reinforcing inorganic filler, wherein the reinforcing filler further comprises greater than 0 phr and less than 10 phr of carbon black.

### Advantageous Effects of Invention

The rubber composition of the tread of the tire according to the invention allows unexpectedly improved balance of performances between On-road performance and Off-road performance.

### Description of Embodiments

The tires of the invention are particularly intended to equip passenger motor vehicles, including 4×4 (four-wheel drive) vehicles and SUV (Sport Utility Vehicles) vehicles, and industrial vehicles particularly selected from vans and heavy duty vehicles (i.e., bus or heavy road transport vehicles (lorries, tractors, trailers)).

Each of the below aspect(s), the embodiment(s) and the variant(s) including each of the preferred range(s) and/or matter(s) may be applied to any one of the other aspect(s), the other embodiment(s) and the other variant(s) of the invention unless expressly stated otherwise.

The rubber composition of the tread of the tire according to the invention is based on an elastomer matrix.

Elastomer (or loosely "rubber", the two terms being regarded as synonyms) of the "diene" type is to be understood in a known manner as an (meaning one or more) elastomer derived at least partly (i.e. a homopolymer or a copolymer) from diene monomers (monomers bearing two carbon-carbon double bonds, conjugated or not).

These diene elastomers can be classified into two categories: "essentially unsaturated" or "essentially saturated". Generally, the expression "essentially unsaturated" is understood to mean a diene elastomer resulting at least in part from conjugated diene monomers having a content of units of diene origin (conjugated dienes) which is greater than 15% (mol %); thus it is that diene elastomers such as butyl rubbers or diene/α -olefin copolymers of the EPDM type do not fall under the preceding definition and may especially be described as "essentially saturated" diene elastomers (low or very low content of units of diene origin, always less than 15%). In the category of "essentially unsaturated" diene elastomers, the expression "highly unsaturated" diene elastomer is understood to mean in particular a diene elastomer having a content of units of diene origin (conjugated dienes) which is greater than 50%.

Although it applies to any type of diene elastomer, a person skilled in the art of tires will understand that the invention is preferably employed with essentially unsaturated diene elastomers.

Given these definitions, the expression diene elastomer capable of being used in the compositions in accordance with the invention is understood in particular to mean:
(a) - any homopolymer obtained by polymerization of a conjugated diene monomer, preferably having from 4 to 12 carbon atoms;
(b) - any copolymer obtained by copolymerization of one or more conjugated dienes with one another or with one or more vinyl aromatic compounds preferably having from 8 to 20 carbon atoms.

The following are suitable in particular as conjugated dienes: 1,3-butadiene, 2-methyl-1,3-butadiene, 2,3-di(C₁-C₅ alkyl)-1,3-butadienes, such as, for example, 2,3-dimethyl-1,3-butadiene, 2,3-diethyl-1,3-butadiene, 2-methyl-3-ethyl-1 ,3-butadiene or 2-methyl-3-isopropyl-1 ,3-butadiene, an aryl-1,3-butadiene, 1,3-pentadiene or 2,4-hexadiene. The following, for example, are suitable as vinylaromatic compounds: styrene, ortho-, meta- or para-methylstyrene, the"vinyltoluene" commercial mixture, para-(tert-butyl) styrene, methoxystyrenes, chlorostyrenes, vinylmesitylene, divinylbenzene or vinylnaphthalene.

The elastomer matrix in the rubber composition of the tread of the tire according to the invention comprises at least a first diene elastomer and a second diene elastomer.

The first diene elastomer may be selected from the group consisting of polybutadienes (BRs), polyisoprene (preferably selected from the group consisting of synthetic polyisoprenes (IRs), natural rubber (NR) and the mixtures thereof), butadiene copolymers, isoprene copolymers and the mixtures thereof; such copolymers are selected more preferably from the group consisting of styrene-butadiene copolymers (SBRs), isoprene-styrene copolymers (SIRs) and the mixtures thereof. More preferably, the first diene elastomer is a styrene-butadiene copolymer (SBR).

The first diene elastomer may have any microstructure which depends on the polymerization conditions used, in particular on the presence or absence of a modifying and/or randomizing agent and on the amounts of modifying and/or randomizing agent employed. This elastomer may, for example, be a block, statistical, sequential or micro sequential elastomer and may be prepared in dispersion or in solution.

The first diene elastomer bears at least one SiOR function, R being a hydrogen atom or a hydrocarbon radical.

The expression "hydrocarbon radical" means a monovalent group essentially consisting of carbon and hydrogen atoms. Such a group may comprise at least one heteroatom, and it is known that the assembly formed by the carbon and hydrogen atoms represents the major number fraction in the hydrocarbon radical, for example alkyl or alkoxyalkyl; preferably assembly formed by the carbon and hydrogen atoms represents the entirety of the hydrocarbon radical(s), for example alkyl. Such a SiOR (R is alkyl or alkoxyalkyl) is referred as an "alkoxysilane" function. While, a SiOH (R is a hydrogen atom) is referred as a "silanol" function.

The SiOR function borne by the first diene elastomer is not located at the chain ends of the first diene elastomer.

A second aspect of the invention is the tire according to the first aspect, wherein the SiOR function borne by the first diene elastomer is a pendant group, which is equivalent to saying that the silicon atom of the SiOR function is not be inserted between the carbon-carbon bonds of the elastomer chain of the first diene elastomer. A diene elastomer bearing a pendant SiOR function, for example, is prepared by hydrosilylation of the elastomer chain by a silane bearing an alkoxysilane group, followed by hydrolysis of the alkoxysilane function to give a SiOR function.

A third aspect of the invention is the tire according to the first aspect, wherein the SiOR function borne by the first diene elastomer is not any pendant group, but is situated in the elastomer chain, that is, is within the elastomer chain, which is equivalent to saying that the silicon atom of the SiOR function is inserted between the carbon-carbon bonds of the elastomer chain of the first diene elastomer. Such a diene elastomer is prepared according to the procedure described in a patent EP 2 285 852. This second variant is preferential and applies to the first aspect.

A fourth aspect of the invention is the tire according to any one of the first to third aspects, wherein the first diene elastomer is a styrene-butadiene copolymer (SBR), preferably a solution styrene-butadiene copolymer which is a copolymer of butadiene and styrene, prepared in solution.

A fifth aspect of the invention is the tire according to any one of the first to the fourth aspect, wherein the first diene elastomer further bears at least one amine function, preferably at least one tertiary amine function.

According to a preferred embodiment of the fifth aspect, the amine function borne by the first diene elastomer may be a tertiary amine function. Mention will be made, as tertiary amine function, of the amines substituted with C₁-C₁₀ alkyl radicals, preferably C₁-C₄ alkyl, more preferably methyl or ethyl radical(s).

Generally, such a function borne by an elastomer, particularly a diene elastomer, may be located on the elastomer chain end(s) or may not be located at the elastomer chain ends, that is, may be away from the chain ends. The first case occurs for example when the diene elastomer is prepared using a polymerization initiator bearing the function or using a functionalizing agent. The second case occurs for example when the diene elastomer is modified by the use of a coupling agent or star-branching agent bearing the function.

According to this embodiment or a preferred embodiment of the fifth aspect, the amine function borne by the first diene elastomer may be a pendant group. The pendant position of the amine function means, in a known way, that the nitrogen atom of the amine function may not be inserted between the carbon-carbon bonds of the elastomer chain of the first diene elastomer.

A sixth aspect of the invention is the tire according to the fifth aspect, wherein the SiOR function bears the amine function.

Such a diene elastomer may result from the modification of a diene elastomer by a coupling agent that introduces, the elastomer chain, an alkoxysilane group bearing an amine function according to the operating procedure described in a patent EP 2 285 852. The following are suitable for example as coupling agent:
N,N-dialkylaminopropyltrialkoxysilanes, C₁-C₁₀, preferably C₁-C₄, dialkyl groups, the compounds 3-(N,N-dimethylaminopropyl)trimethoxysilane,
3-(N,N-dimethylaminopropyl)triethoxysilane,
3-(N,N-diethylaminopropyl)trimethoxysilane,
3-(N,N-diethylaminopropyl)triethoxysilane being most particularly preferred, irrespective of the embodiment of the invention.

A seventh aspect of the invention is the tire according to any one of the first to the sixth aspects, wherein R of the SiOR function is a hydrocarbon radical.

According to a preferred embodiment of the seventh aspect, the hydrocarbon radical may be an alkyl radical, preferably an alkyl radical having 1 to 12 carbon atoms, more preferably a branched, linear or else cyclic alkyl radical having 1 to 12 carbon atoms, still more preferably 1 to 6 carbon atoms, particularly 1 to 4 carbon atoms, more particularly methyl or ethyl radical(s).

An eighth aspect of the invention is the tire according to any one of the first to the seventh aspects, wherein the first diene elastomer has a glass transition temperature (Tg_{DSC}) of lower than -40°C, (notably between -100°C and -40°C), advantageously less than -45°C (notably between -90°C and -45°C).

A ninth aspect of the invention is the tire according to any one of the first to the eighth aspects, wherein the elastomer matrix comprises 10 to 90 phr, preferably 15 to 85 phr, more preferably 20 to 80 phr, still more preferably 25 to 75 phr, of the first diene elastomer.

The second diene elastomer is a polyisoprene elastomer different from the first diene elastomer.

A tenth aspect of the invention is the tire according to any one of the first to the ninth aspects, wherein the elastomer matrix comprises 10 to 90 phr, preferably 15 to 85 phr, more preferably 20 to 80 phr, still more preferably 25 to 75 phr, of the second diene elastomer.

According to a preferred embodiment of the invention, the second diene elastomer may be polyisoprene(s) selected from the group consisting of synthetic polyisoprenes (IRs), natural rubber (NR) and the mixtures thereof. The synthetic polyisoprene(s) may be synthetic cis-1,4-polyisoprene(s), preferably having a content (mol %) of cis-1,4-units of greater than 90%, more preferably of greater than 98%.

An eleventh aspect of the invention is the tire according to any one of the first to the tenth aspects, wherein the second diene elastomer predominately comprises natural rubber, that is, the second diene elastomer comprises more than 50% by weight of natural rubber per 100% by weight of the second diene elastomer.

A twelfth aspect of the invention is the tire according to any one of the first to the eleventh aspects, wherein the second diene elastomer is natural rubber.

A thirteenth aspect of the invention is the tire according to any one of the first to the twelfth aspects, wherein the total content of the first diene elastomer and the second elastomer is more than 90 phr, preferably more than 95 phr.

A fourteenth aspect of the invention is the tire according to the thirteenth aspect, wherein the total content of the first diene elastomer and the second elastomer is 100 phr.

The rubber composition of the tread of the tire according to the invention is based on a reinforcing filler.

The reinforcing filler may comprise a reinforcing inorganic filler (for instance, silica), a reinforcing organic filler (for example, carbon black), or the mixtures thereof.

The expression "reinforcing inorganic filler" should be understood here to mean any inorganic or mineral filler, whatever its color and its origin (natural or synthetic), also referred to as "white filler", "clear filler" or even "non-black filler", in contrast to carbon black, capable of reinforcing by itself alone, without means other than an intermediate coupling agent, a rubber composition intended for the manufacture of tires, in other words capable of replacing, in its reinforcing role, a conventional tire-grade carbon black; such a filler is generally characterized, in a known manner, by the presence of hydroxyl (-OH) groups at its surface.

The physical state under the presence of this filler is unimportant, whether it is in the form of powder, microbeads, granules, beads or any other suitable densified form. Of course, the reinforcing inorganic filler of the mixtures of various reinforcing inorganic fillers, preferably of highly dispersible siliceous and/or aluminous fillers is described hereafter.

Mineral fillers of the siliceous type, preferably silica (SiO₂) and/or the aluminous type, preferably alumina (Al₂O₃) are suitable in particular as the reinforcing inorganic fillers.

The reinforcing filler in the rubber composition of the tread of the tire according to the invention comprises more than 45 phr (for example, between 45 and 135 phr) of a reinforcing inorganic filler.

A fifteenth aspect of the invention is the tire according to any one of the first to the fourteenth aspect, wherein the reinforcing filler comprises more than 50 phr (for example, between 50 and 130 phr), preferably more than 55 phr (for example, between 55 and 125 phr), more preferably at least 60 phr (for example, 60 to 120 phr), of the reinforcing inorganic filler.

A sixteenth aspect of the invention is the tire according to any one of the first to the fifteenth aspects, wherein the reinforcing inorganic filler predominately comprises silica, that is, the reinforcing inorganic filler comprises more than 50% by weight of silica per 100% by weight of the reinforcing inorganic filler.

A seventeenth aspect of the invention is the tire according to the sixteenth aspect, wherein, the reinforcing inorganic filler is silica.

The reinforcing inorganic filler of the reinforcing filler in the rubber composition may be based on a type of silica or a blend of several silicas. The silica used may be any reinforcing silica known to a person skilled in the art, in particular any precipitated or pyrogenic silica having a BET surface area and a CTAB specific surface area that are both less than 450 m²/g, preferably from 20 to 400 m²/g. Such silica may be covered or not. Mention will be made, as low specific surface silica, of Sidistar R300 from Elkem Silicon Materials. Mention will be made, as highly dispersible precipitated silicas ("HDSs"), for example, of "Ultrasil 7000" and "Ultrasil 7005" from Evonik, "Zeosil 1165 MP", "Zeosil 1135 MP" and "Zeosil 1115 MP" from Rhodia, "Hi-Sil EZ150G" from PPG, "Zeopol 8715", "Zeopol 8745" and "Zeopol 8755" from Huber or the silicas with a high specific surface area as described in a patent application WO 03/016387. Mention will be made, as pyrogenic silicas, for example, of "CAB-O-SIL S-17D" from Cabot, "HDK T40" from Wacker, "Aeroperl 300/30", "Aerosil 380", "Aerosil 150" or "Aerosil 90" from Evonik. Such silica may be covered, for example, "CAB-O-SIL TS-530" covered with hexamethyldiasilazene or "CAB-O-SIL TS-622" covered with dimethyldichlorosilane from Cabot.

A person skilled in the art will understand that a reinforcing filler of another nature, in particular organic nature, such as carbon black, might be used as filler equivalent to the reinforcing inorganic filler described in the present section, provided that this reinforcing filler is covered with an inorganic layer, such as silica, or else comprises, at its surface, functional sites, in particular hydroxyls, requiring the use of a coupling agent in order to form the connection between the filler and the elastomer. By way of example, mention may be made of carbon blacks for tires, such as described in patent applications WO 96/37547 and WO 99/28380.

An eighteenth aspect of the invention is the tire according to any one of the first to the seventeenth aspects, wherein the reinforcing filler comprises for example, between 1 and 10 phr, between 1.5 and 10 phr, or between 2 and 10 phr of carbon black.

Within the ranges indicated, there is a benefit of coloring properties (black pigmentation agent) and anti-UV properties of carbon blacks, without furthermore adversely affecting the typical performance provided by the reinforcing inorganic filler, namely low hysteresis (reduced rolling resistance).

According to one preferred embodiment of the invention, the total content of reinforcing filler may be 50 to 140 phr, preferably 55 to 135 phr, more preferably 60 to 130 phr, still more preferably 65 to 125 phr, in order to make better balance between reinforcement and processability of the tire.

In order to couple the reinforcing inorganic filler to the elastomer matrix, for instance, the diene elastomer, use can be made, in a known manner, of a coupling agent (or bonding agent) intended to provide a satisfactory connection, of chemical and/or physical nature, between the reinforcing inorganic filler (surface of its particles) and the elastomer matrix, for instance, the diene elastomer. This coupling agent is at least bifunctional. Use can be made in particular of at least bifunctional organosilanes or polyorganosiloxanes.

Use can be made in particular of silane polysulphides, referred to as "symmetrical" or "asymmetrical" depending on their particular structure, as described, for example, in applications WO 03/002648, WO 03/002649 and WO 2004/033548.

Particularly suitable silane polysulphides correspond to the following general formula (I):

(I) Z - A - Sx - A - Z,

in which:
- x is an integer from 2 to 8 (preferably from 2 to 5);
- A is a divalent hydrocarbon radical (preferably, C₁-C₁₈ alkylene groups or C₆-C₁₂ arylene groups, more particularly C₁-C₁₀, in particular C₁-C₄, alkylenes, especially propylene);
- Z corresponds to one of the formulae below: 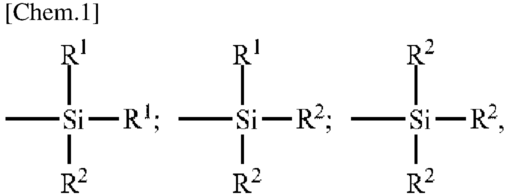
in which:
- the R¹ radicals which are unsubstituted or substituted and identical to or different from one another, represent a C₁-C₁₈ alkyl, C₅-C₁₈ cycloalkyl or C₆-C₁₈ aryl group (preferably, C₁-C₆ alkyl, cyclohexyl or phenyl groups, in particular C₁-C₄ alkyl groups, more particularly methyl and/or ethyl),
- the R² radicals which are unsubstituted or substituted and identical to or different from one another, represent a C₁-C₁₈ alkoxyl or C₅-C₁₈ cycloalkoxyl group (preferably a group selected from C₁-C₈ alkoxyls and C₅-C₈ cycloalkoxyls, more preferably a group selected from C₁-C₄ alkoxyls, in particular methoxyl and ethoxyl), are suitable in particular, without limitation of the above definition.

In the case of a mixture of alkoxysilane polysulphides corresponding to the above formula (I), in particular normal commercially available mixtures, the mean value of the "x" indices is a fractional number preferably of between 2 and 5, more preferably of approximately 4. However, the present invention can also advantageously be carried out, for example, with alkoxysilane disulphides (x = 2).

Mention will more particularly be made, as examples of silane polysulphides, of bis((C₁-C₄)alkoxyl(C₁-C₄)alkylsilyl(C₁-C₄)alkyl)polysulphides (in particular disulphides, trisulphides or tetrasulphides), such as, for example, bis(3-trimethoxysilylpropyl) or bis(3-triethoxysilylpropyl)polysulphides. Use is in particular made, among these compounds, of bis(3-triethoxysilylpropyl)tetrasulphide, abbreviated to TESPT, of formula [(C₂H₅O)₃Si(CH₂)₃S₂]₂, or bis(3-triethoxysilylpropyl)disulphide, abbreviated to TESPD, of formula [(C₂HSO)₃ Si(CH₂)₃S]₂. Mention will also be made, as preferred examples, of bis(mono(C₁-C₄ )alkoxyldi(C₁-C₄)alkylsilylpropyl)polysulphides (in particular disulphides, trisulphides or tetrasulphides), more particularly bis(monoethoxydimethylsilylpropyl)tetrasulphide, as described in patent application WO 02/083782 (or US 7 217 751).

Mention will in particular be made, as coupling agent other than alkoxysilane polysulphide, of bifunctional POSs (polyorganosiloxanes) or of hydroxysilane polysulphides (R² = OH in the above formula (I)), such as described in patent applications WO 02/30939 (or US 6 774 255) and WO 02/31041 (or US 2004/051210), or of silanes or POSs carrying azodicarbonyl functional groups, such as described, for example, in patent applications WO 2006/125532, WO 2006/125533 and WO 2006/125534.

As examples of other silane sulphides, mention will be made, for example, of the silanes bearing at least one thiol (-SH) function (referred to as mercaptosilanes) and/or at least one blocked thiol function, such as described, for example, in patents or patent applications US 6 849 754, WO 99/09036, WO 2006/023815, WO 2007/098080, WO 2008/055986 and WO 2010/072685.

Of course, use could also be made of mixtures of the coupling agents described previously, as described in particular in the aforementioned patent application WO 2006/125534.

According to one preferred embodiment of the invention, the content of coupling agent may be preferably from 0.5 to 15% by weight per 100% by weight of the reinforcing inorganic filler, particularly silica.

According to one preferred embodiment of the invention, the rubber composition of the tire according to the invention may be based on less than 15 phr (for example, between 0.1 and 15 phr) of coupling agent.

The rubber compositions of the tread of the tires according to the invention may be based on all or a portion(s) of the usual additives generally used in the elastomer compositions for tires, such as, for example, protection agents, such as antiozone waxes, chemical antiozonants, antioxidants, plasticizing agent, tackifying resins, methylene acceptors (for example phenolic novolak resin) or methylene donors (for example HMT or H3M hexamethylenetetramine (HMT) or hexamethoxymethylmelamine (H3M)), a crosslinking system based either on sulphur or on donors of sulphur and/or peroxide and/or bismaleimides, vulcanization accelerators, or vulcanization activators.

A nineteenth aspect of the invention is the tire according to any one of the first to the eighteenth aspects, wherein the rubber composition is further based on a plasticizing agent, preferably more than 5 phr (for example, between 5 and 50 phr), of the plasticizing agent, more preferably more than 10 phr (for example, between 10 and 40 phr), of the plasticizing agent.

A twentieth aspect of the invention is the tire according to the nineteenth aspect, wherein the plasticizing agent comprises a liquid plasticizer(s), a hydrocarbon resin(s) or the mixtures thereof, preferably the liquid plasticizer(s) and the hydrocarbon resin(s), more preferably between 0 and 30 phr of the liquid plasticizer(s) and between 0 and 30 phr of the hydrocarbon resin(s), still more preferably between 0 and 15 phr of the liquid plasticizer(s) and between 5 and 25 phr of the hydrocarbon resin(s).

Any extending oil, whether of aromatic or non-aromatic nature, any liquid plasticizing agent known for its plasticizing properties with regard to elastomer matrix(es), for instance, diene elastomers, can be used as the liquid plasticizer(s) to soften the matrix by diluting the elastomer and the reinforcing filler. At ambient temperature (20°C) under atmospheric pressure, these plasticizers or these oils, which are more or less viscous, are liquids (that is to say, as a reminder, substances that have the ability to eventually take on the shape of their container), as opposite to plasticizing hydrocarbon resin(s) which are by nature solid at ambient temperature (20°C) under atmospheric pressure.

A twenty first aspect of the invention is the tire according to the twentieth aspect, wherein the liquid plasticizer(s) is selected from the group consisting of liquid diene polymers, polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers, phosphate plasticizers, sulphonate plasticizers and the mixtures thereof, preferably selected from the group consisting of MES oils, TDAE oils, naphthenic oils, vegetable oils and the mixtures thereof, more preferably selected from the group consisting of MES oils, vegetable oils and the mixtures thereof, still more preferably selected from the group consisting of vegetable oils and the mixtures thereof. The vegetable oil(s) may be made of an oil selected from the group consisting of linseed, safflower, soybean, corn, cottonseed, turnip seed, castor, tung, pine, sunflower, palm, olive, coconut, groundnut and grapeseed oils, and the mixtures thereof, particularly sunflower oil(s), more particularly sunflower oil(s) containing over 60%, still more particularly over 70%, advantageously over 80%, more advantageously over 90%, still advantageously 100%, by weight of oleic acid.

The hydrocarbon resin(s) are polymer well known by a person skilled in the art, which are essentially based on carbon and hydrogen, and thus miscible by nature in rubber composition(s), for instance, diene elastomer composition(s). They can be aliphatic or aromatic or also of the aliphatic/aromatic type, that is to say based on aliphatic and/or aromatic monomers. They can be natural or synthetic and may or may not be petroleum-based (if such is the case, also known under the name of petroleum resins). They are preferably exclusively hydrocarbon, that is to say, that they comprise only carbon and hydrogen atoms.

Preferably, the hydrocarbon resins as being "plasticizing" exhibit at least one, more preferably all, of the following characteristics:
- a Tg_{DSC} of above 20°C (for example, between 20°C and 100°C), preferably above 30°C (for example, between 30°C and 100°C), more preferably above 40°C (for example, between 40°C and 100°C), still more preferably above 45°C (for example, between 45°C and 100°C), particularly at least 50°C (for example, at least 50°C and less than 100°C);
- a number-average molecular weight (Mn) of between 400 and 2000 g/mol (more preferably between 500 and 1500 g/mol);
- a polydispersity index (PI) of less than 3, more preferably less than 2 (reminder: PI = Mw/Mn with Mw the weight-average molecular weight).

The macrostructure (Mw, Mn and PI) of the hydrocarbon resins is determined by steric exclusion chromatography (SEC): solvent tetrahydrofuran; temperature 35°C; concentration 1 g/l; flow rate 1 ml/min; solution filtered through a filter with a porosity of 0.45µm before injection; Moore calibration with polystyrene standards; set of 3 "Waters" columns in series ("Styragel" HR4E, HR1 and HR0.5); detection by differential refractometer ("Waters 2410") and its associated operating software ("Waters Empower").

A twenty second aspect of the invention is the tire according to the twentieth aspect, wherein the hydrocarbon resin(s) are selected from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins, alphamethyl styrene homopolymer or copolymer resins, and the mixtures thereof. Use is more preferably made, among the above copolymer resins, of those selected from the group consisting of (D)CPD/vinylaromatic copolymer resins, (D)CPD/terpene copolymer resins, (D)CPD/C5 fraction copolymer resins, (D)CPD/C9 fraction copolymer resins, terpene/vinylaromatic copolymer resins, terpene/phenol copolymer resins, C5 fraction/vinyl-aromatic copolymer resins, C9 fraction/vinylaromatic copolymer resins, and the mixtures thereof.

The term "terpene" combines here, in a known way, the α-pinene, β-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, α-methylstyrene, ortho-, meta- or para-methylstyrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a C₉ fraction (or more generally from a C₈ to C₁₀ fraction) are suitable, for example, as vinylaromatic monomer. Preferably, the vinylaromatic compound is styrene or a vinylaromatic monomer resulting from a C₉ fraction (or more generally from a C₈ to C₁₀ fraction). Preferably, the vinylaromatic compound is the minor monomer, expressed as molar fraction, in the copolymer under consideration.

The preferred resins above are well known to a person skilled in the art and are commercially available, for example:
- polylimonene resins: by DRT under the name "Dercolyte L120" (Mn=625 g/mol; Mw=1010 g/mol; PI=1.6; Tg_{DSC}=72°C) or by Arizona Chemical Company under the name "Sylvagum TR7125C" (Mn=630 g/mol; Mw=950 g/mol; PI=1.5; Tg_{DSC}=70°C);
- C₅ fraction/vinylaromatic, notably C₅ fraction/styrene or C₅ fraction/C₉ fraction, copolymer resins: by Neville Chemical Company under the names "Super Nevtac 78", "Super Nevtac 85" or "Super Nevtac 99", by Goodyear Chemicals under the name "Wingtack Extra", by Kolon under the names "Hikorez T1095" and "Hikorez T1100", or by Exxon under the names "Escorez 2101" and "ECR 373";
limonene/styrene copolymer resins: by DRT under the name "Dercolyte TS 105" or by Arizona Chemical Company under the names "ZT115LT" and "ZT5100".

Mention may also be made, as examples of other preferred resins, of phenol-modified α-methylstirene resins. It should be remembered that, in order to characterize these phenol-modified resins, use is made, in a known way, of a number referred to as "hydroxyl number" (measured according to Standard ISO 4326 and expressed in mg KOH/g). α-Methylstirene resins, in particular those modified with phenol, are well known to a person skilled in the art and are available commercially, for example sold by Arizona Chemical Company under the names "Sylvares SA 100" (Mn=660 g/mol; PI=1.5; Tg_{DSC}=53°C); "Sylvares SA 120" (Mn=1030 g/mol; PI=1.9; Tg_{DSC}=64°C); "Sylvares 540" (Mn=620 g/mol; PI=1.3; Tg_{DSC}=36°C; hydroxyl number=56 mg KOH/ g); and "Sylvares 600" (Mn=850 g/mol; PI=1.4; Tg_{DSC}=50°C; hydroxyl number=31 mg KOH/g).

These compositions can be also based on coupling activators when a coupling agent is used, agents for covering the reinforcing inorganic filler or more generally processing aids capable, in a known way, by virtue of an improvement in the dispersion of the filler in the rubber matrix and of a lowering of the viscosity of the compositions, of improving their property of processing in the raw state; these agents are, for example, hydrolysable silanes, such as alkylalkoxysilanes, polyols, polyethers, amines, or hydroxylated or hydrolysable polyorganosiloxanes.

The rubber compositions of the tread of the tires according to the invention may be manufactured in appropriate mixers using two successive preparation phases well known to a person skilled in the art: a first phase of thermomechanical working or kneading (referred to a as "non-productive" phase) at high temperature, up to a maximum temperature of between 110°C and 190°C, preferably between 130°C and 180°C, followed by a second phase of mechanical working (referred to as "productive" phase) at a lower temperature, typically of less than 110°C, for example between 40°C and 100°C, finishing phase during which the crosslinking or vulcanization system is incorporated.

A process which can be used for the manufacture of such compositions comprises, for example and preferably, the following steps:
- incorporating in the elastomer matrix, for instance, the diene elastomer(s), in a mixer, the reinforcing filler, during a first stage ("non productive" stage) everything being kneaded thermomechanically (for example in one or more steps) until a maximum temperature of between 110°C and 190°C is reached;
- cooling the combined mixture to a temperature of less than 100°C;
- subsequently incorporating, during a second stage (referred to as a "productive" stage), a crosslinking system;
- kneading everything up to a maximum temperature of less than 110°C;
- extruding or calendering the rubber composition thus obtained, in particular in the form of a portion of a tire tread.

By way of example, the first (non-productive) phase is carried out in a single thermomechanical stage during which all the necessary constituents are introduced into an appropriate mixer, such as a standard internal mixer, followed, in a second step, for example after kneading for 1 to 2 minutes, by the other additives, optional additional filler-covering agents or processing aids, with the exception of the crosslinking system. The total kneading time, in this non-productive phase, is preferably between 1 and 15 min.

After cooling the mixture thus obtained, the crosslinking system is then incorporated at low temperature (for example, between 40°C and 100°C), generally in an external mixer, such as an open mill; the combined mixture is then mixed (the second (productive) phase) for a few minutes, for example between 2 and 15 min.

The crosslinking system is preferably based on sulphur and on a primary vulcanization accelerator, in particular on an accelerator of sulphenamide type. Added to this vulcanization system are various known secondary accelerators or vulcanization activators, such as zinc oxide, stearic acid, guanidine derivatives (in particular diphenylguanidine), and the like, incorporated during the first non-productive phase and/or during the productive phase. The content of sulphur is preferably between 0.5 and 10.0 phr, and that of the primary accelerator is preferably between 0.5 and 5.0 phr.

Use may be made, as accelerator (primary or secondary) of any compound capable of acting as accelerator of the vulcanization of elastomer matrix, for instance, diene elastomers, in the presence of sulphur, in particular accelerators of the thiazoles type and their derivatives, accelerators of thiurams types, or zinc dithiocar bamates. These accelerators are more preferably selected from the group consisting of 2-mercaptobenzothiazyl disulphide (abbreviated to "MBTS"), N-cyclohexyl-2-benzothiazole sulphenamide (abbreviated to "CBS"), N,N-dicyclohexyl-2 benzothiazolesulphenamide ("DCBS"), N-ter't-butyl-2-ben zothiazolesulphenamide ("TBBS"), N-tert-butyl-2 benzothiazolesulphenimide ("TBSI"), zinc dibenzyldithio-carbamate ("ZBEC"), Tetrabenzylthiuram disulfide ("TBZTD") and the mixtures thereof.

The final composition thus obtained is subsequently calendered, for example in the form of a sheet or of a plaque, in particular for laboratory characterization, or else extruded in the form of a rubber profiled element which can be used directly as a portion of a tire.

The vulcanization (or curing) is carried out in a known way at a temperature generally of between 110°C and 190°C for a sufficient time which can vary, for example, between 5 and 90 min depending in particular on the curing temperature, the vulcanization system adopted and the vulcanization kinetics of the composition under consideration.

The rubber composition(s) of the tread(s) of the tire(s) according to the invention can constitute all or a portion only of the tread in accordance with the invention, in the case of a tread of composite type formed from several rubber compositions of different formulations.

The invention relates to the rubber compositions and to the treads described above, both in the raw state (i.e., before curing) and in the cured state (i.e., after crosslinking or vulcanization).

The invention also applies to the cases where the rubber compositions described above form only one part of treads of composite or hybrid type, especially those consisting of two radially superposed layers of different formulations (referred to as "cap-base" construction), that are both patterned and intended to come into contact with the road when the tire is rolling, during the service life of the latter. The base part of the formulation described above could then constitute the radially outer layer of the tread intended to come into contact with the ground from the moment when a new tire starts rolling, or on the other hand its radially inner layer intended to come into contact with the ground at a later stage.

A twenty third aspect of the invention is a rubber composition based on at least an elastomer matrix comprising 5 to 95 phr of a first diene elastomer bearing at least one SiOR function, R being a hydrogen atom or a hydrocarbon radical, the SiOR function not located at the chain ends of the first diene elastomer, and 5 to 95 phr of a second diene elastomer which is a polyisoprene, and a reinforcing filler comprising more than 45 phr (for example, between 45 and 135 phr) of a reinforcing inorganic filler, wherein the reinforcing filler further comprises greater than 0 phr and less than 10 phr of carbon black.

The invention is further illustrated by the following non-limiting examples.

### Example

Three rubber compositions based on a diene elastomer (SBR bearing a SiOR function) or a blend of diene elastomers (SBR bearing a SiOR function and natural rubber as a polyisoprene) reinforced with a blend of silica (as a reinforcing inorganic filler) and carbon black were prepared. The formulations of three rubber compositions are given at Table 1 with the content of the various products expressed in phr.

Each rubber composition was produced as follows: The reinforcing filler, its associated coupling agent, the elastomer matrix and the various other ingredients, with the exception of the vulcanization system, were successively introduced into an internal mixer having an initial vessel temperature of approximately 60°C; the mixer was thus approximately 70% full (% by volume). Thermomechanical working (non-productive phase) was then carried out in one stage, which lasts in total approximately 3 to 4 minutes, until a maximum "dropping" temperature of 165°C was reached. The mixture thus obtained was recovered and cooled and then sulphur and an accelerator of sulphenamide type were incorporated on an external mixer (homofinisher) at 20 to 30°C, everything being mixed (productive phase) for an appropriate time (for example, between 5 and 12 min).

The rubber compositions thus obtained were subsequently calendered, either in the form of sheets (thickness of 2 to 3 mm) or of fine sheets of rubber, for the measurement of their physical or mechanical properties, or in the form of profiled elements which could be used directly, after cutting and/or assembling to the desired dimensions, for example as tire semi-finished products, in particular as tire treads.

As the measurement of tear strength, test samples were cut from a cured plaque with a thickness of about 2.5 mm. Notches (perpendicular to the test direction) were created in the samples prior to testing. The force and elongation at break was measured using an Instron 5565 Uniaxial Testing System. The cross-head speed was 500 mm/min. Samples were tested at 60°C. The results are expressed in base 100, that is to say that the value 100 is arbitrarily assigned to the tear strength index being equal to force at rupture (MPa)*elongation at break (%) of the reference (C-1), and the values of the rubber compositions are shown in Table 2. The higher the value is, the less susceptible is the material to tearing, which is to say that the higher durability during running off-road is.

As the measurement of dynamic properties, tan(δ)max of each rubber composition was measured on a viscosity analyzer (Metravib VA4000) according to Standard ASTM D 5992-96. The response of a sample of vulcanized composition (cylindrical test specimen with a thickness of 4 mm and with a cross section of 400 mm²), subjected to a simple alternating sinusoidal shear stress, at a frequency of 10 Hz, at 0°C, was recorded. A strain amplitude sweep was carried out with constant stress at 0.7 MPa. The results are expressed in base 100, that is to say that the value 100 is arbitrarily assigned to the tan(δ) value at 0°C of the reference (C-1), and the values of the rubber compositions are shown in Table 2. The higher the value is, the better the wet grip of the tire is.

The results from Table 2 demonstrate that the rubber compositions (C-2 and C-3) according to the invention have an unexpectedly improved balance of these performances than that of the reference (C-1).

In conclusion, the rubber composition according to the invention allows an improvement of the balance of performances between On-road performance and Off-road performance.

**[Table 1]**

| | C-1 | C-2 | C-3 |
|---|---|---|---|
| SBR (1) | 100 | 70 | 50 |
| NR (2) | | 30 | 50 |
| Carbon black (3) | 2.9 | 2.9 | 2.9 |
| Silica (4) | 65 | 65 | 65 |
| Coupling agent (5) | 6.5 | 6.5 | 6.5 |
| Liquid plasticizer (6) | 16.5 | 16.5 | 16.5 |
| Hydrocarbon resin (7) | 8.5 | 8.5 | 8.5 |
| Antioxidant (8) | 3.7 | 3.7 | 3.7 |
| Antiozone wax | 1.7 | 1.7 | 1.7 |
| DPG (9) | 1.3 | 1.3 | 1.3 |
| Stearic acid | 2 | 2 | 2 |
| Zinc oxide | 1 | 1 | 1 |
| Sulphur | 1.5 | 1.5 | 1.5 |
| Accelerator (10) | 1.7 | 1.7 | 1.7 |

(1) SBR2: Solution SBR with 27% of styrene unit and 24 % of unit 1,2 of the butadiene part (Tg_{DSC} = -48°C) bearing a SiOR function, R being a methyl radical, the SiOR function not located at the ends of the elastomer chain; wherein the silicon atom of the SiOR function is inserted between the carbon-carbon bonds of the elastomer chain; the SBR further bearing a tertiary amine function made of the amine substituted with two methyl radicals; wherein the nitrogen atom of the amine function is not inserted between the carbon-carbon of the elastomer chain, and the SiOR function bears the amine function; the SBR prepared according to a process described in a patent EP 2 285 852;
(2) NR: Natural rubber (peptised);
(3) Carbon black: Carbon black (ASTM grade N234 from Cabot);
(4) Silica: Silica ("Zeosil 1165MP" from Rhodia (CTAB, BET: about 160 m²/g));
(5) Coupling agent TESPT ("Si69" from Evonik);
(6) Oleic sunflower oil ("Agripure 80" from Cargill, Weight percent oleic acid: 100%);
(7) Cycloaliphatic hydrocarbon resins ("ESCOREZ5600" from ExxonMobil, Tg_{DSC} =52°C);
(8) Mixture of N-(1,3-dimethylbutyl)-N-phenyl-para-phenylenediamine ("Santoflex 6-PPD" from Flexsys) and 2,2,4-trimethyl-1,2-dihydroquinolone ("TMQ" from Lanxess);
(9) Diphenylguanidine ("Perkacit DPG" from Flexsys);
(10) Mixtures of N-dicyclohexyl-2-benzothiazolesulphenamide ("Santocure CBS" from Flexsys) and 2-mercaptobenzothiazyl disulphide ("Perkacit MBTS" from Flexsys).

**[Table 2]**

| | C-1 | C-2 | C-3 |
|---|---|---|---|
| On-road performance | 100 | 100 | 96 |
| Off-road performance | 100 | 174 | 218 |
| Balance performance (On-road/Off-road) | 100 | 137 | 157 |

## Claims

1. A tire having a tread comprising a rubber composition based on at least:
- an elastomer matrix comprising 5 to 95 phr of a first diene elastomer bearing at least one SiOR function, R being a hydrogen atom or a hydrocarbon radical, the SiOR function not located at the chain ends of the first diene elastomer, and 5 to 95 phr of a second diene elastomer which is a polyisoprene; and
- a reinforcing filler comprising more than 45 phr of a reinforcing inorganic filler; wherein the reinforcing filler further comprises greater than 0 phr and less than 10 phr of carbon black.

2. The tire according to Claim 1, wherein the SiOR function borne by the first diene elastomer is a pendant group.

3. The tire according to Claim 1, wherein the SiOR function borne by the first diene elastomer is not any pendant group.

4. The tire according to any one of Claims 1 to 3, wherein the first diene elastomer is a styrene-butadiene copolymer.

5. The tire according to any one of Claims 1 to 4, wherein the first diene elastomer further bears at least one amine function, preferably wherein the SiOR function bears the amine function.

6. The tire according to any one of Claims 1 to 5, wherein R of the SiOR function is a hydrocarbon radical.

7. The tire according to any one of Claims 1 to 6, wherein the first diene elastomer has a glass transition temperature of lower than -40°C.

8. The tire according to any one of Claims 1 to 7, wherein the second diene elastomer predominately comprises natural rubber, preferably wherein the second diene elastomer is natural rubber.

9. The tire according to any one of Claims 1 to 8, wherein the total content of the first diene elastomer and the second elastomer is more than 90 phr.

10. The tire according to Claim 9, wherein the total content of the first diene elastomer and the second elastomer is 100 phr.

11. The tire according to any one of Claims 1 to 10, wherein the reinforcing filler comprises more than 50 phr of the reinforcing inorganic filler.

12. The tire according to any one of Claims 1 to 11, wherein the reinforcing inorganic filler predominately comprises silica, preferably wherein the reinforcing inorganic filler is silica.

13. The tire according to any one of Claims 1 to 12, wherein the rubber composition is further based on a plasticizing agent, preferably wherein the plasticizing agent comprises a liquid plasticizer(s), a hydrocarbon resin(s) or the mixtures thereof.

14. A rubber composition based on at least:
- an elastomer matrix comprising 5 to 95 phr of a first diene elastomer bearing at least one SiOR function, R being a hydrogen atom or a hydrocarbon radical, the SiOR function not located at the chain ends of the first diene elastomer, and 5 to 95 phr of a second diene elastomer which is a polyisoprene; and
- a reinforcing filler comprising more than 45 phr of a reinforcing inorganic filler, wherein the reinforcing filler further comprises greater than 0 phr and less than 10 phr of carbon black.

## Patentansprüche

1. Reifen mit einer Lauffläche, umfassend eine Kautschukzusammensetzung auf Basis von mindestens:
- einer Elastomermatrix mit 5 bis 95 phr eines ersten Dienelastomers, das mindestens eine SiOR-Funktion trägt, wobei R für ein Wasserstoffatom oder einen Kohlenwasserstoffrest steht, wobei sich die SiOR-Funktion nicht an den Kettenenden des ersten Dienelastomers befindet, und 5 bis 95 phr eines zweiten Dienelastomers, bei dem es sich um Polyisopren handelt; und
- einem verstärkenden Füllstoff, der mehr als 45 phr eines verstärkenden anorganischen Füllstoffs umfasst; wobei der verstärkende Füllstoff ferner mehr als 0 phr und weniger als 10 phr Ruß umfasst.

2. Reifen nach Anspruch 1, wobei es sich bei der SiOR-Funktion des ersten Dienelastomers um eine Seitengruppe handelt.

3. Reifen nach Anspruch 1, wobei es sich bei der SiOR-Funktion des ersten Dienelastomers nicht um eine Seitengruppe handelt.

4. Reifen nach einem der Ansprüche 1 bis 3, wobei es sich bei dem ersten Dienelastomer um ein Styrol-Butadien-Copolymer handelt.

5. Reifen nach einem der Ansprüche 1 bis 4, wobei das erste Dienelastomer ferner mindestens eine Aminfunktion trägt, vorzugsweise wobei die SiOR-Funktion die Aminfunktion trägt.

6. Reifen nach einem der Ansprüche 1 bis 5, wobei R der SiOR-Funktion für einen Kohlenwasserstoffrest steht.

7. Reifen nach einem der Ansprüche 1 bis 6, wobei das erste Dienelastomer eine Glasübergangstemperatur von weniger als -40 °C aufweist.

8. Reifen nach einem der Ansprüche 1 bis 7, wobei das zweite Dienelastomer überwiegend Naturkautschuk umfasst, vorzugsweise wobei es sich bei dem zweiten Dienelastomer um Naturkautschuk handelt.

9. Reifen nach einem der Ansprüche 1 bis 8, wobei der Gesamtgehalt des ersten Dienelastomers und des zweiten Elastomers mehr als 90 phr beträgt.

10. Reifen nach Anspruch 9, wobei der Gesamtgehalt des ersten Dienelastomers und des zweiten Elastomers 100 phr beträgt.

11. Reifen nach einem der Ansprüche 1 bis 10, wobei der verstärkende Füllstoff mehr als 50 phr des verstärkenden anorganischen Füllstoffs umfasst.

12. Reifen nach einem der Ansprüche 1 bis 11, wobei der verstärkende anorganische Füllstoff überwiegend Kieselsäure umfasst, vorzugsweise wobei es sich bei dem verstärkenden anorganischen Füllstoff um Kieselsäure handelt.

13. Reifen nach einem der Ansprüche 1 bis 12, wobei die Kautschukzusammensetzung ferner auf einem Weichmacher basiert, vorzugsweise wobei der Weichmacher einen oder mehrere flüssige Weichmacher, ein oder mehrere Kohlenwasserstoffharze oder Mischungen davon umfasst.

14. Kautschukzusammensetzung auf der Grundlage von wenigstens:
- einer Elastomermatrix mit 5 bis 95 phr eines ersten Dienelastomers, das mindestens eine SiOR-Funktion trägt, wobei R für ein Wasserstoffatom oder einen Kohlenwasserstoffrest steht, wobei sich die SiOR-Funktion nicht an den Kettenenden des ersten Dienelastomers befindet, und 5 bis 95 phr eines zweiten Dienelastomers, bei dem es sich um Polyisopren handelt; und
- einem verstärkenden Füllstoff, der mehr als 45 phr eines verstärkenden anorganischen Füllstoffs umfasst; wobei der verstärkende Füllstoff ferner mehr als 0 phr und weniger als 10 phr Ruß umfasst.

## Revendications

1. Pneumatique ayant une bande de roulement comprenant une composition de caoutchouc à base d'au moins :
- une matrice élastomère comprenant de 5 à 95 pce d'un premier élastomère diénique portant au moins une fonction SiOR, R étant un atome d'hydrogène ou un radical hydrocarboné, la fonction SiOR n'étant pas située en bout de chaîne du premier élastomère diénique ; et 5 à 95 pce d'un deuxième élastomère diénique qui est un polyisoprène ;
- une charge renforçante comprenant plus de 45 pce d'une charge inorganique renforçante;
dans laquelle la charge renforçante comprend en outre plus de 0 et moins de 10 pce de noir de carbone.

2. Pneumatique selon la revendication 1, dans lequel la fonction SiOR portée par le premier élastomère diénique est un groupe pendant.

3. Pneumatique selon la revendication 1, dans lequel la fonction SiOR portée par le premier élastomère diénique n'est pas un groupe pendant.

4. Pneumatique selon l'une quelconque des revendications 1 à 3, dans lequel le premier élastomère diénique est un copolymère de styrène-butadiène.

5. Pneumatique selon l'une quelconque des revendications 1 à 4, dans lequel le premier élastomère diénique porte en outre au moins une fonction amine, de préférence la fonction SiOR porte la fonction amine.

6. Pneumatique selon l'une quelconque des revendications 1 à 5, dans lequel R de la fonction SiOR est un radical hydrocarboné.

7. Pneumatique selon l'une quelconque des revendications 1 à 6, dans lequel le premier élastomère diénique a une température de transition vitreuse Tg inférieure à -40°C.

8. Pneumatique selon l'une quelconque des revendications 1 à 7, dans lequel le deuxième élastomère diénique comprend majoritairement du caoutchouc naturel, de préférence le deuxième élastomère diénique est du caoutchouc naturel.

9. Pneumatique selon l'une quelconque des revendications 1 à 8, dans lequel le taux total du premier élastomère diénique et du deuxième élastomère est de plus de 90 pce.

10. Pneumatique selon la revendication 9, dans lequel le taux total du premier élastomère diénique et du deuxième élastomère est de 100 pce.

11. Pneumatique selon l'une quelconque des revendications 1 à 10, dans lequel la charge renforçante comprend plus de 50 pce de charge renforçante inorganique.

12. Pneumatique selon l'une quelconque des revendications 1 à 11, dans lequel la charge renforçante inorganique comprend majoritairement de la silice, de préférence la charge inorganique renforçante est de la silice.

13. Pneumatique selon l'une quelconque des revendications 1 à 12, dans lequel la composition de caoutchouc est en outre à base d'un agent plastifiant, de préférence l'agent plastifiant comprend un plastifiant liquide, une résine hydrocarbonée ou un de leurs mélanges.

14. Composition de caoutchouc à base d'au moins :
- une matrice élastomère comprenant de 5 à 95 pce d'un premier élastomère diénique portant au moins une fonction SiOR, R étant un atome d'hydrogène ou un radical hydrocarboné, la fonction SiOR n'étant pas située en bout de chaîne du premier élastomère diénique ; et 5 à 95 pce d'un deuxième élastomère diénique qui est un polyisoprène ;
- une charge renforçante comprenant plus de 45 pce d'une charge inorganique renforçante;
dans laquelle la charge renforçante comprend en outre plus de 0 et moins de 10 pce de noir de carbone.
